# EUROPEAN PATENT SPECIFICATION

(11) **EP 4 428 658 B1**
(45) Date of publication and mention of the grant of the patent: **31.12.2025**
(21) Application number: 24158093.5
(22) Date of filing: 16.02.2024
(51) Int. Cl.: G06F 3/01, G06F 3/03, G06V 40/20

(54) **DYNAMICALLY UPDATING INPUT SYSTEM AND METHOD**
DYNAMISCHES AKTUALISIERUNGSEINGABESYSTEM UND -VERFAHREN
SYSTÈME ET PROCÉDÉ D'ENTRÉE À MISE À JOUR DYNAMIQUE

(30) Priority: 07.03.2023 GB 202303290
(43) Date of publication of application: 11.09.2024
(73) Proprietor: Sony Interactive Entertainment Inc., Tokyo 108-0075 (JP)
(72) Inventor: SHAPIRO, Kalila, London, W1F 7LP (GB); LEYTON, Pedro, London, W1F 7LP (GB)
(74) Representative: D Young & Co LLP

(56) References cited:
- US-A1- 2008 178 126
- US-A1- 2011 035 666
- US-A1- 2017 090 589
- US-A1- 2018 011 544
- FENG SHICHANG ET AL: "Many-to-One Gesture-to-Command Flexible Mapping Approach for Smart Teaching Interface Interaction", IEEE ACCESS, vol. 7, 19 December 2019 (2019-12-19), pages 179517 - 179531, XP011761542, DOI: 10.1109/ACCESS.2019.2957365

## Description

### BACKGROUND OF THE INVENTION

### Field of the invention

This disclosure relates to a dynamically updating input system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

Over the years the complexity of computing systems and corresponding content (such as video games) has increased. One factor that has contributed to this is the increase in processing power available to devices, meaning that the number of processing operations that can be performed in a unit time can be increased significantly. In addition to this, there has been an increase in both the complexity and variety of input devices that are available to users; this enables more inputs to be provided, as well as different inputs (such as gaze-based inputs) which were not widely adopted until relatively recently.

An example of such an input type is gesture-based inputs. While a number of examples of gesture-based inputs have been utilised for a number of years, there has been a recent increase in interest in this input type due to its particular suitability for enabling intuitive interactions in virtual reality (VR) and augmented reality (AR) applications. This suitability can be due to the ability of a user to interact without peripherals (although peripherals may be used to provide gesture-based inputs), as well as the fact that a more life-like interaction with virtual objects can be desired to enable an increased level of immersion for the user.

However, gesture-based inputs can often have a number of limitations - these can stem from both the lack of constraint (in that a developer may set any physically possible action as a gesture) and the lack of consistency between different users capabilities and preferences. For instance, a developer that defines a number of righthanded gestures as the primary inputs can cause a left-handed user to become frustrated, while users with a limited range of motion may not be able to reliably recreate the required inputs to perform particular functions. It is also considered that the sheer number of possible gestures that may be defined may cause issues, as it can be burdensome for a user to remember each of the gestures associated with respective interactions.

It is in the context of the above discussion that the present disclosure arises.

Previously proposed arrangements are disclosed in US 2011/035666 A1, US 2008/178126 A1, US 2018/011544 A1, and US 2017/090589 A1.

### SUMMARY OF THE INVENTION

This disclosure is defined by claim 1. Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an entertainment system;
Figure 2 schematically illustrates a mapping generation method;
Figure 3 schematically illustrates a method for determining an interaction with one or more virtual objects or elements;
Figure 4 schematically illustrates an input generation system for generating inputs in dependence upon gestures made by a user; and
Figure 5 schematically illustrates an input generation method for generating inputs in dependence upon gestures made by a user.

### DESCRIPTION OF THE EMBODIMENTS

Referring now to the drawings, wherein like reference numerals designate identical or corresponding parts throughout the several views, embodiments of the present disclosure are described.

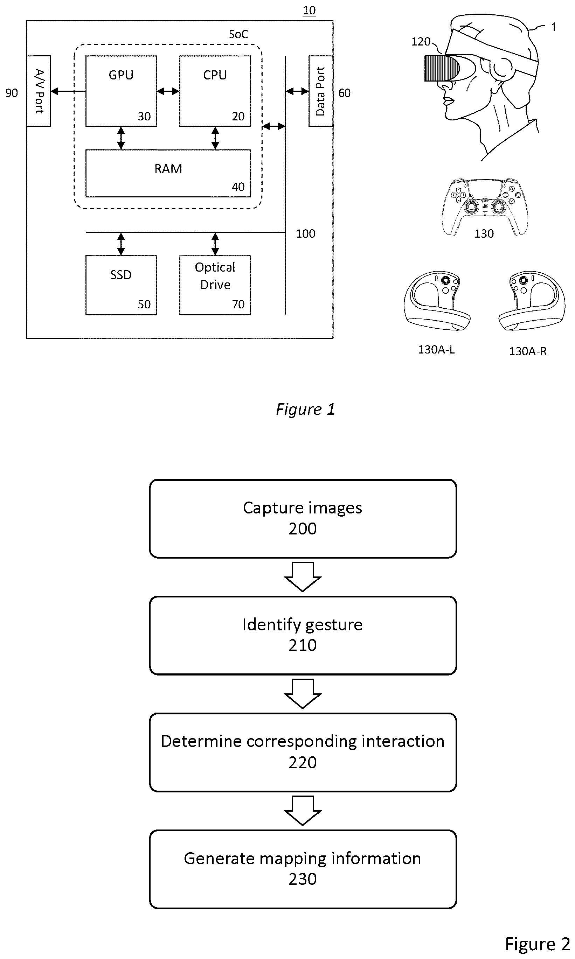

Referring to Figure 1, an example of an entertainment system 10 is a computer or console such as the Sony^{®} PlayStation 5^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment system is a head mounted display 'HMD' 120, such as the PlayStation VR 2 'PSVR2', worn by a user 1.

Where components are not integrated, they may be connected as appropriate either by a dedicated data link or via a bus 100.

Interaction with the system is typically provided using one or more handheld controllers (130, 130A), such as the DualSense^{®} controller (130) in the case of the PS5, and/or one or more VR controllers (130A-L,R) in the case of the HMD.

Implementations of the present disclosure are directed towards a system and method for enabling a user to interact with a system using gesture-based inputs in a reliable and simplified manner. In particular, implementations of the present disclosure provide an interaction process in which the inputs are associated with particular gestures in dependence upon the user's interactions; rather than utilising a predefined mapping between each of the interactions and predefined gestures, the mapping can be defined in a dynamic fashion in dependence upon the detected motion of the user in respect of particular functions or interactive objects (real or virtual).

Figure 2 schematically illustrates a method for generating such a mapping; this may be performed in conjunction with the performing of the interaction (such that the mapping is generated during the interaction process) or separately, such as during a dedicated calibration process or as a part of an observation process in which a user's interactions are monitored to identify suitable gesture mappings. Aspects of this method are described in more detail below, with reference to the other Figures.

A step 200 comprises capturing images of the user performing a gesture or otherwise interacting with an object. These images may be captured of a user who is using a head-mountable display device (HMD) to interact with a virtual object, for example, or of a user who is interacting with one or more real objects.

A step 210 comprises identifying a gesture that is being performed by the user; more specifically, this step can comprise the function of identifying an intent to interact with an element or object. In such a case, a user's motion can be considered to include movement corresponding to an intent to interact, and movement which is not an intent to interact. The latter of these can be considered noise for the purpose of gesture detection, and can include motion such as a user stretching, twitching, or otherwise moving their body in a manner that is not intended to interact with an external object/element in a particular fashion.

The gesture identification may be based upon the identification of a user's body position (or the position of a specific body part of the user) over a number of sequential image frames, for example, or may include tracking a predefined marker or peripheral and inferring user motion based upon the motion of the tracked feature. A library of gestures may be maintained which can be used to identify gestures (for instance, by matching detected motion to predefined motion segments), or other identification methods such as the use of a trained machine learning model may be utilised.

A step 220 comprises determining an interaction corresponding to that gesture; for instance, the effect of the user's gesture upon the object being interacted with. In the case of a real object, this effect can be determined from the images that are captured of the user's interaction with the object, for example. In either case, the interaction could also be inferred based upon a user having been instructed to perform a particular interaction (such as a user being told to 'kick the ball' in order to identify a mapping for this action). In some cases, it may be possible to instead infer or derive the intention of the user so as to determine the interaction that is to be performed - this may be particularly suitable in a 'live mapping' implementation in which the mapping is derived while the user is interacting with a system.

A step 230 comprises the generation of the mapping information for future reference; this may be combined with (or replaced by) an immediate use of the input, enabling a live generation of the mapping during interaction with a particular application. The generation of mapping information can refer to any generation of a correlation between a particular action performed by the user (a gesture) and an interaction with a virtual object or element (a function). This mapping may be stored in a look-up table, for instance, or any other suitable format. In some cases a one-to-one mapping of gestures and functions may be preferred; however, one-to-many mappings (for instance, context-dependent mappings) and/or many-to-one mappings may be also be considered appropriate for some gestures and/or interactions.

The above method provides a general outline of an implementation according to the present disclosure. In line with this method, it is possible to determine a mapping between user gestures and a particular interaction with a virtual object, thereby removing the requirement for a developer to predefine such a mapping and the requirement for a user to then learn than mapping. It is considered that such a method enables a user to interact with objects in a natural manner (for instance, the manner in which they would interact with a corresponding real object or element) which means that a mapping does not need to be learned at all - the user may simply continue to interact in an intuitive manner, without consciously considering a defined mapping.

A mapping refers to any correspondence between a gesture performed by the user and an input that is generated for controlling processing of an application or the like. These may be context dependent, such as based upon a user's physical state, an application being interacted with, the environmental state within such an application, and/or user-specific preferences. This can lead to a dynamic mapping which varies over time, with users typically having different mappings between gestures and inputs. In some cases the mapping may be a binary 'if gesture observed, generate a corresponding input', while in others a magnitude may be associated with a gesture (such as duration a position is held, or an amount or speed of motion) to determine an input which has a particular magnitude.

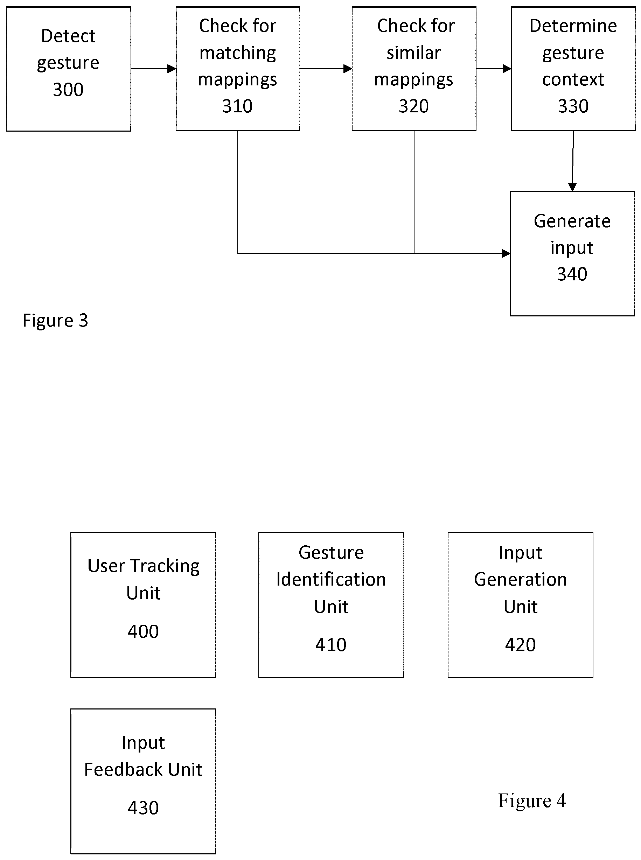

Figure 3 schematically illustrates a method for determining an interaction with one or more virtual objects or elements in accordance with implementations of the present disclosure.

A step 300 comprises detecting that a user is making a gesture, for instance based upon images captured of the user or alternative motion tracking data (such as motion data associated with a peripheral held by a user). This step may comprise both the identification that a gesture is being performed (rather than 'noise' such as unintentional motion by a user or other motion not related to an attempt to interact with an object or element) and a characterisation or parameterisation of the gesture to assist with further processing relating to the gesture.

A step 310 comprises checking whether the gesture is already associated with a mapping; if it is, then the method proceeds to step 340 and a corresponding input is generated. This step may be performed in any suitable manner, with the purpose of the step being to confirm if any existing mappings correspond to the gesture that has been detected in step 300. In some examples, a reconstruction of the gesture (for example, by reproducing the detected motion using a skeletal model of the user or a reference model) may be compared to an animated version of an existing gesture to compare the motion; alternatively, or in addition, parameterised representations of each may be compared to determine a correspondence.

For instance, a 'wave' gesture may be represented by a label indicating that the primary motion is associated with the forearm, with an angular range of the motion of the hand relative to the elbow or a base pose of the arm also being described. Detected gestures may be represented in the same manner, so as to enable a simplified comparison of the respective motions.

If the gesture is not determined to be already associated with a mapping, then the method proceeds instead to step 320 which comprises checking whether any mappings exist for similar gestures.

In step 320, a similar process to that of step 310 may be performed with the modification of checking for similar mappings. This can enable variations on a particular gesture to be associated with a similar interaction, for instance. An example of this is a 'wave' gesture which is performed by a user in which the angular range of the motion of the hand relative to the elbow is larger than is typical; this could be identified as being similar to the wave gesture, and as such the mapping of the wave gesture could be re-used with a modification to the generated output that correlates with the differences between the gestures (for instance, a user's avatar performing a more energetic wave).

This step can also consider whether a detected gesture is a composite gesture which comprises elements of two or more existing mappings. Based upon such a determination, the existing mappings can be used to generate an input which comprises elements of the inputs associated to those respective mappings. For instance, a gesture which is identified as comprising a twist and a pull can be mapped (based upon an existing 'twist' mapping and an existing 'pull' mapping) to an input which comprises elements of both of the inputs respectively corresponding to twisting and pulling.

In the case that similar mappings exist and can be used to generate an appropriate input, the method proceeds to step 340. However, in the case that no similar mappings exist the method instead proceeds to step 330.

The step 330 comprises the determination of the context of the gesture so as to assist in determining an appropriate input. This may be real-world context of the user, such as determining whether the user is sitting or standing, whether there are spatial constraints, and/or whether there are real-world objects being interacted with (in which case it may be considered that the user does not wish to interact with a virtual object, for instance). Alternatively, or in addition, the context of the user in respect of one or more virtual objects/elements/environments may be considered. For example, the type of virtual object being held by a user or their avatar may be used to determine likely inputs - the same gesture could be mapped to a 'throw' if the user is holding a ball, or a 'swing' if the user is holding a sword, for instance.

The type of content being interacted with by a user may also be considered as a part of the context, as similar gestures may be associated with very different desired inputs in dependence upon the application or other content that the user is interacting with. For instance, a user of a word processing application or a video playback application may use gestures for application-specific functions that don't exist in other applications (such as games) - and similar gestures may be used for each of these applications.

In some cases, the context may include a prediction or expectation of a user action. For instance, if a user's avatar is standing in front of a virtual door while holding a key then it may be expected that the gesture by the user would correspond to the use of that key with the door. Similarly, if a user is faced with an enemy then the gestures of the user may be interpreted as corresponding to combat-related inputs. Predictions may also include a consideration of a user's likely decision making outcome or actions to be taken, rather than being dependent only upon the context of the objects/environment. For instance, knowing that a user often takes action A following action B can be used to infer that after action B has been performed, the next gesture is likely to correspond to action A.

The context may also include a consideration of parameters such as the time of day, a level of user focus, the presence of other people in the user's real-world environment, whether animals or particular objects are present in the user's real-world environment, or any other factors that may modify a user's gestures or suggest that an alternative or modified mapping between gestures and inputs may be appropriate. For instance, late at night it may be considered that the user's gestures become less energetic (due to tiredness) and as such a modified or alternative mapping may be used for determining inputs. Similarly, a user who has other people or objects present may use less expressive gestures (for instance, to reduce the risk of hitting the other people or objects) and therefore a modified or alternative mapping may be used.

The method then proceeds to step 340, which comprises the generation of an input to the system with which the user is interacting (with the input being provided to the system once generated). This input can be used to control the processing, for example by interacting with a virtual object or element. In addition to this, the generated input and the detected gesture can be stored to generate a mapping for future use - this can enable a streamlining of the input generation process when the same gesture is detected on another occasion.

In some cases the input may be selected from a predetermined number of options - for instance, the input may be selected from a list of possible inputs associated with a game, or a number of inputs associated with a particular peripheral that could be used to provide inputs instead of gestures. Alternatively, inputs may be generated freely (for instance, mapping a gesture to a system-level input rather than application-specific) with an application being interacted with being tasked with converting the generated input into an appropriate action.

One or more additional inputs may also be considered when determining the intended input based upon the user's gesture. For instance, gaze tracking or the like may be used to identify a likely target for interaction, which can be used to determine an appropriate input. Other inputs include biometric data and/or audio data, such as capturing audio of a user narrating their intent or otherwise giving an indication of their intent.

In some implementations, the generated input may be determined in accordance with one or more parameters indicating a user's range of motion; this may be an absolute range of motion (that is, the physically possible range of motion) or a restricted range of motion (that is, the range of motion that is usually utilised by the user). This can assist with providing context for the user's gestures in a number of cases. This can be particularly useful in cases in which a gesture is used to provide an input having an adjustable magnitude, as the percentage of the user's range of motion that is utilised can be considered in identifying the magnitude to be assigned to the input. The range of motion may be determined as a part of a calibration process, for example, or may be detected during a user's interactions with a system or application (noting that the restricted range of motion may be different for different applications).

As an alternative, in some cases the final step 340 may comprise storing the detected gesture and generated input as a mapping for future use without providing an input to a system for controlling processing. This may be advantageous when the detected gesture involves a user's interaction with a real-world object, and a mapping is generated for a corresponding interaction between the user and a similar virtual object. In such a case, both the gesture and the object being interacted with may be stored in the mapping, as information about the object can be used to determine whether a virtual object sufficiently corresponds to the real object (and therefore whether the gesture is applicable).

While the discussion of Figure 3 has focused upon an implementation in which steps 320 and/or 330 are omitted in the case of a successful mapping determination in the preceding steps, it is not considered that this is essential. For instance, the determination of the gesture context in step 330 may be used to confirm that the correct mapping has been selected (for example, a throw input could be considered erroneous in the case in which the context indicates that the user is not holding an object), or to select from a number of candidate inputs corresponding to a single gesture or a plurality of similar gestures. Similarly, a matching gesture may be identified in step 310 and one or more similar mappings may be identified in step 320, each of which can be considered a candidate for the input generation - these could be presented directly to a user for selection (as an example of skipping step 330) or the context may then be used to select from amongst these candidates.

In some cases, a user may wish to change a gesture mapping or the incorrect input may be generated in response to a mapping. In such a case, a user may be able to provide an input indicating that the wrong input was generated (or this can be inferred from poor performance or player monitoring, such as identifying player frustration) or an input to delete a known mapping. Player frustration may be inferred from biometric readings of the user's state, captured audio of the user's voice, and/or from gestures (such as repeatedly performing the same gesture with increasing intensity) for example. In such a case, rather than using an existing mapping a new mapping (or input, without the need to generate a mapping) may be generated in accordance with any of the methods presented in this description.

In some implementations a user may be provided with feedback upon the gestures that are detected. This feedback may be generated based upon a comparison with gestures used by other users (such as an average of all users, or some subset of users such as a particular age group, those who interact with similar applications, or those with a similar gesture style). The feedback may include information about modifications that could be considered by the user, such as a modification to reduce the amount of strain on a user or a modification to increase the level of control enjoyed by a user (for instance, using a whole arm to gesture instead of a single finger so as to enable improved precision) or the efficiency of the gestures (for instance, an indication that changing a gesture to incorporate a particular motion would enable an easier segue to a common follow-up gesture).

Alternatively, or in addition, the feedback may identify advice about one or more peripherals or accessories to be considered by a user. For example, a user whose gestures indicate difficulty holding or using a peripheral, or an existing injury, may be recommended a wrist support (or other support as appropriate). Similarly, a user who uses gestures that are hard to distinguish from one another may be recommended a peripheral to improve the ability to distinguish between gestures. For instance, a baton-style object may assist with differentiating gestures in that tracking the end of the baton would provide a magnified representation (relative to tracking an arm/hand directly) of the motion of the user's arm and/or hand due to the distance from the centre of rotation or other motion.

Figure 4 schematically illustrates an input generation system for generating inputs in dependence upon gestures made by a user. The inputs are intended for the control of processing of an application, such as a game, at a processing device (for instance, the entertainment device of Figure 1) associated with the user; for instance, the user may utilise gesture-based inputs to control gameplay at a games console. The system of Figure 4 may be used to implement an input generation process in accordance with the method of Figure 3, for example.

The system comprises a user tracking unit 400, a gesture identification unit 410, an input generation unit 420, and an optional input feedback unit 430. The functionality of these units may be realised by one or more processing units (such as CPUs and/or GPUs) located in any suitable device or combination of devices; for instance, a games console, personal computer, server, or mobile phone.

The user tracking unit 400 is configured to track a user's motion; the user's motion may be tracked using captured images of the user and/or outputs from one or more sensors associated with the user or peripheral associated with the user. Images of the user may be captured by a camera associated with the device executing the application that is being controlled, for example. Sensors that may be used to track the user's movements include gyroscopes and accelerometers, for example, or inside-out tracking of peripherals using cameras mounted upon those peripherals may be used to infer user motion.

The gesture identification unit 410 is configured to identify one or more gestures made by a user in dependence upon the tracked motion. This may include any suitable characterisation and/or parameterisation of the tracked motion of the user; alternatively, or in addition, one or more predefined gestures (such as 'pull', 'twist', or 'push') may be used as references for describing the tracked motion. For instance, a user's tracked motion could be identified as 'a pull motion with a start position of x, y, z and a velocity of N metres per second'. It is however considered that the format in which the identified gesture is represented is able to be selected freely insofar as the gesture is defined clearly enough to enable it to be differentiated from other gestures.

The input generation unit 420 is configured to generate an input representative of the identified gesture, the input being used to provide an interaction with an application being executed by a processing device, wherein if no predefined mapping of the identified gesture to an input exists, the input generation unit 420 is configured to generate the input in dependence upon a prediction of the user's intended interaction. While reference is made here to 'an input' and 'the gesture', it is not considered that a one-to-one mapping between gestures and inputs is required - the techniques disclosed in this document may be equally applicable to many-to-one and one-to-many mappings between gestures and inputs as appropriate. For instance, a single gesture may correspond to a plurality of inputs - particularly if the gesture is a complex gesture comprising a number of distinct motions. Similarly, a number of different gestures may be required to achieve a single input.

In some implementations, the input generation unit 420 may be configured to generate the input in accordance with a user profile indicating one or more preferences or physical characteristics of the user. For instance, the user's range of motion may be referenced when determining the magnitude of an input based upon a gesture - a gesture having a particular magnitude may be considered smaller to a user with a larger range of motion, for instance, and as such the generated input should be determined correspondingly. Examples of preferences that may be considered include preferences for particular correspondences between gestures and inputs (such as preferring to use a particular hand for a particular task), or preferences for how particular objects or elements should be interacted with (for instance, how gentle to be with precious objects) so as to modify a generated input accordingly.

In some cases, the input generation unit 420 may be configured to generate the input in accordance with a determination of the accepted inputs of the application being executed. For instance, each of the inputs associated with a game may be listed and the input generation unit 420 may be configured to select one of those inputs as corresponding to the identified gesture. This selection may be made on the basis of similarities between the inputs and the identified gesture (such as a gesture of the user drawing a circle being correlated with a 'O' input), for example, or a correspondence between the action associated with that input and the gesture (such as a gesture of the user performing a throw action being correlated with an input that causes a throw action to be performed).

The context in which the gesture is performed may also be considered when identifying the input that is to be generated in dependence upon the identified gesture. This may be any context which characterises the intended interaction - the application being interacted with, the time of day, and/or additional inputs (such as audio or gaze tracking data) are all examples of this. It is also considered that a target for a user's intended interaction may be determined in dependence upon context within the application, a time of day, a detected utterance by the user, and/or gaze tracking data for the user. The identification of an intended target for interaction may be advantageous in that it enables the range of likely inputs corresponding to a gesture to be reduced (for instance, in acknowledgement of the fact that an average user is more likely to use a key to open a door than to throw it).

The prediction of the user's intended interaction refers to any method for identifying an expected or likely interaction for the user - this can be a determination of the most likely interaction given a particular state of the application (such as a particular game state) for that user (or a group of users), or it may be based upon the gesture alone.

In some cases, the input generation unit 420 may be configured to generate the prediction of the user's intended interaction in dependence upon predefined mappings for similar gestures - for instance, if a predetermined mapping already exists for a 'throw' gesture then similar gestures may be assumed to also be an intention to throw. Similarly, in some cases the input generation unit 420 is configured to generate the prediction of the user's intended interaction in dependence upon a plurality of predefined mappings for respective gestures representing components of the identified gesture. That is to say that complex gestures which represent aspects of a number of component gestures (such as 'twist' and 'throw') can be used to identify an intended interaction (such as a combination of the two being identified as a 'throw with spin applied').

The input generation unit 420 may also be configured to generate the prediction of the user's intended interaction in dependence upon a user's previously-tracked interactions with real-world objects. As discussed above, in some implementations the user may be tracked in their interactions with real-world objects so as to identify how they would interact with those real-world objects on the assumption that a user would attempt to interact with a virtual object in a similar manner. For instance, a body position of the user when attempting to open a jar could be observed in a real-world interaction, and then observation of this body position during a virtual interaction could be used to determine that the user is attempting to open a virtual jar held by the user's avatar.

In some implementations the input generation unit 420 may be configured to determine whether the generated input corresponds to the user's intended interaction in dependence upon feedback by the user; indications of an incorrect input may include explicit indications (such as the user pressing a particular button, repeating a gesture, or speaking to that effect) and implicit indications (such as detected frustration based upon biometrics or changes in the emphasis of the user's motion). In response to this determination that the generated input does not correspond to the user's intended interaction an alternative input can be generated in dependence upon the same identified gesture (that is, not requiring a new gesture to be performed by the user) or a repeated gesture by the user. An existing mapping may also be updated based upon this determination, so as to further utilise the dynamic nature of the input generation.

The input generation unit 420 may be configured to store the generated input in association with the identified gesture to generate a mapping that can be used for future input generation. This may also comprise a storing of the context of the gesture, input, and/or interaction so as to refine the mapping further. This can enable the dynamic input generation to be used to generate a mapping in a real-time fashion, thereby enabling a user to skip a calibration or explicit input mapping step without compromising the overall level of interactivity.

The optional input feedback unit 430 is configured to generate one or more recommendations for the user in dependence upon the identified gesture and/or generated input. As described above, these recommendations may include suggestions for new peripherals or equipment to improve interaction or health, and/or modifications to gestures to enable an improved or more efficient interaction.

The arrangement of Figure 4 is an example of a processor (for example, a GPU and/or CPU located in a games console or any other computing device, such as the entertainment device of Figure 1) that is operable to generate inputs in dependence upon gestures made by a user, and in particular is operable to:
track a user's motion;
identify one or more gestures made by a user in dependence upon the tracked motion; and
generate an input representative of the identified gesture, the input being used to provide an interaction with an application being executed by a processing device, wherein if no predefined mapping of the identified gesture to an input exists, the input generation unit is configured to generate the input in dependence upon a prediction of the user's intended interaction.

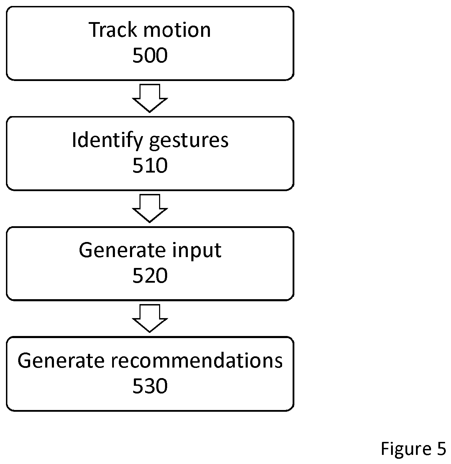

Figure 5 schematically illustrates an input generation method for generating inputs in dependence upon gestures made by a user. Such a method may be implemented using any suitable processing hardware, including the entertainment device of Figure 1 or the system described with reference to the functional units of Figure 4.

A step 500 comprises tracking a user's motion; this may be performed using any suitable image-based tracking arrangement, for instance, or the use of motion sensors such as accelerometers and gyroscopes which are associated with a peripheral or the like held by (or otherwise affixed to) the user.

A step 510 comprises identifying one or more gestures made by a user in dependence upon the tracked motion. In some cases, this may include a characterisation and/or parameterisation of the tracked motion so as to generate a representation of the motion which may be compared to predefined gestures or the like in a more efficient manner.

A step 520 comprises generating an input representative of the identified gesture, the input being used to provide an interaction with an application being executed by a processing device, wherein if no predefined mapping of the identified gesture to an input exists, the input is generated in dependence upon a prediction of the user's intended interaction

An optional step 530 comprises generating one or more recommendations for the user in dependence upon the identified gesture and/or generated input. As described above, these recommendations may include suggestions for new peripherals or equipment to improve interaction or health, and/or modifications to gestures to enable an improved or more efficient interaction.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

## Claims

1. An input generation system for generating inputs in dependence upon gestures made by a user, the system comprising:
a user tracking unit (400) configured to track a user's motion;
a gesture identification unit (410) configured to identify one or more gestures made by a user in dependence upon the tracked motion; and
an input generation unit (420) configured to generate an input representative of the identified gesture, the input being used to provide an interaction with an application being executed by a processing device,
wherein if no predefined mapping of the identified gesture to an input exists, the input generation unit is configured to generate the input in dependence upon a prediction of the user's intended interaction, and
**characterised in that**
the input generation unit is configured to generate the prediction of the user's intended interaction in dependence upon a plurality of predefined mappings for respective gestures, the respective gestures representing components of the identified gesture.

2. A system according to claim 1, wherein a target for a user's intended interaction is determined in dependence upon context within the application, a time of day, a detected utterance by the user, and/or gaze tracking data for the user.

3. A system according to any preceding claim, wherein the input generation unit is configured to generate the prediction of the user's intended interaction in dependence upon predefined mappings for similar gestures.

4. A system according to any preceding claim, wherein the input generation unit is configured to generate the prediction of the user's intended interaction with a virtual object in dependence upon a user's previously-tracked interactions with real-world objects, wherein the previously-tracked interactions comprise stored gesture information and information identifying the real-world objects.

5. A system according to any preceding claim, wherein the input generation unit is configured to generate the input in accordance with a user profile indicating one or more preferences or physical characteristics of the user.

6. A system according to any preceding claim, wherein the input generation unit is configured to generate the input in accordance with a determination of the accepted inputs of the application being executed.

7. A system according to any preceding claim, wherein the input generation unit is configured to store the generated input in association with the identified gesture to generate a mapping that can be used for future input generation.

8. A system according to any preceding claim, wherein the input generation unit is configured to determine whether the generated input corresponds to the user's intended interaction in dependence upon feedback by the user.

9. A system according to claim 8, wherein if the generated input does not correspond to the user's intended interaction an alternative input is generated in dependence upon the same identified gesture or a repeated gesture by the user.

10. A system according to any preceding claim, comprising an input feedback unit (430) configured to generate one or more recommendations for the user in dependence upon the identified gesture and/or generated input.

11. A system according to any preceding claim, wherein the user's motion is tracked using captured images of the user and/or outputs from one or more sensors associated with the user or peripheral associated with the user.

12. An input generation method for generating inputs in dependence upon gestures made by a user, the method comprising:
tracking (500) a user's motion;
identifying (510) one or more gestures made by a user in dependence upon the tracked motion; and
generating (520) an input representative of the identified gesture, the input being used to provide an interaction with an application being executed by a processing device,
wherein if no predefined mapping of the identified gesture to an input exists, the input is generated in dependence upon a prediction of the user's intended interaction, and
**characterised in that**
the generation of the prediction of the user's intended interaction is dependent upon a plurality of predefined mappings for respective gestures, the respective gestures representing components of the identified gesture.

13. Computer software which, when executed by a computer, causes the computer to carry out the method of claim 12.

14. A non-transitory machine-readable storage medium which stores computer software according to claim 13.

## Patentansprüche

1. Eingabeerzeugungssystem zum Erzeugen von Eingaben in Abhängigkeit von Gesten, die durch einen Benutzer vorgenommen werden, das System umfassend:
eine Benutzerverfolgungseinheit (400), die konfiguriert ist, um eine Bewegung eines Benutzers zu verfolgen;
eine Gestenerkennungseinheit (410), die konfiguriert ist, um eine oder mehrere Gesten, die durch einen Benutzer vorgenommen werden, in Abhängigkeit von der verfolgten Bewegung zu erkennen; und
eine Eingabeerzeugungseinheit (420), die konfiguriert ist, um eine Eingabe zu erzeugen, die die erkannte Geste repräsentiert, wobei die Eingabe verwendet wird, um eine Interaktion mit einer Anwendung bereitzustellen, die durch eine Verarbeitungsvorrichtung ausgeführt wird,
wobei, falls keine vordefinierte Zuordnung der erkannten Geste zu einer Eingabe existiert, die Eingabeerzeugungseinheit konfiguriert ist, um die Eingabe in Abhängigkeit von einer Vorhersage der beabsichtigten Interaktion des Benutzers zu erzeugen, und
**dadurch gekennzeichnet, dass** die Eingabeerzeugungseinheit konfiguriert ist, um die Vorhersage der beabsichtigten Interaktion des Benutzers in Abhängigkeit von einer Vielzahl vordefinierter Zuordnungen für entsprechende Gesten zu erzeugen, wobei die entsprechenden Gesten Komponenten der erkannten Geste darstellen.

2. System nach Anspruch 1, wobei ein Ziel für eine beabsichtigte Interaktion eines Benutzers in Abhängigkeit von einem Kontext innerhalb der Anwendung, einer Tageszeit, einer erfassten Äußerung des Benutzers und/oder Blickverfolgungsdaten für den Benutzer bestimmt wird.

3. System nach einem der vorstehenden Ansprüche, wobei die Eingabeerzeugungseinheit konfiguriert ist, um die Vorhersage der beabsichtigten Interaktion des Benutzers in Abhängigkeit von vordefinierten Zuordnungen für ähnliche Gesten zu erzeugen.

4. System nach einem der vorstehenden Ansprüche, wobei die Eingabeerzeugungseinheit konfiguriert ist, um die Vorhersage der beabsichtigten Interaktion des Benutzers mit einem virtuellen Objekt in Abhängigkeit von den zuvor verfolgten Interaktionen des Benutzers mit Objekten der realen Welt zu erzeugen, wobei die zuvor verfolgten Interaktionen gespeicherte Gesteninformationen und Informationen zum Erkennen der Objekt der realen Welt umfassen.

5. System nach einem der vorstehenden Ansprüche, wobei die Eingabeerzeugungseinheit konfiguriert ist, um die Eingabe gemäß einem Benutzerprofil zu erzeugen, das eine oder mehrere Präferenzen oder physische Merkmale des Benutzers angibt.

6. System nach einem der vorstehenden Ansprüche, wobei die Eingabeerzeugungseinheit konfiguriert ist, um die Eingabe gemäß einer Bestimmung der akzeptierten Eingaben der Anwendung, die ausgeführt wird, zu erzeugen.

7. System nach einem der vorstehenden Ansprüche, wobei die Eingabeerzeugungseinheit konfiguriert ist, um die erzeugte Eingabe in Verbindung mit der erkannten Geste zu speichern, um eine Zuordnung zu erzeugen, die für die zukünftige Eingabeerzeugung verwendet werden kann.

8. System nach einem der vorstehenden Ansprüche, wobei die Eingabeerzeugungseinheit konfiguriert ist, um in Abhängigkeit von einem Feedback durch den Benutzer zu bestimmen, ob die erzeugte Eingabe der von dem Benutzer beabsichtigten Interaktion entspricht.

9. System nach Anspruch 8, wobei, falls die erzeugte Eingabe nicht der von dem Benutzer beabsichtigten Interaktion entspricht, eine alternative Eingabe in Abhängigkeit von derselben identifizierten Geste oder einer wiederholten Geste durch den Benutzer erzeugt wird.

10. System nach einem vorstehenden Ansprüche, umfassend eine Eingabe-Feedback-Einheit (430), die konfiguriert ist, um in Abhängigkeit von der erkannten Geste und/oder der erkannten Eingabe eine oder mehrere Empfehlungen für den Benutzer zu erzeugen.

11. System nach einem der vorstehenden Ansprüche, wobei die Bewegung des Benutzers unter Verwendung von aufgenommenen Bildern des Benutzers und/oder Ausgaben eines oder mehrerer Sensoren, die mit dem Benutzer verbunden sind, oder eines mit dem Benutzer verbundenen Peripheriegeräts verfolgt wird.

12. Eingabeerzeugungsverfahren zum Erzeugen von Eingaben in Abhängigkeit von Gesten, die durch einen Benutzer vorgenommen werden, das Verfahren umfassend:
Verfolgen (500) einer Bewegung eines Benutzers;
Erkennen (510) einer oder mehrerer Gesten, die durch einen Benutzer vorgenommen werden, in Abhängigkeit von der verfolgten Bewegung; und
Erzeugen (520) einer Eingabe, die die identifizierte Geste repräsentiert, wobei die Eingabe verwendet wird, um eine Interaktion mit einer Anwendung bereitzustellen, die durch eine Verarbeitungsvorrichtung ausgeführt wird,
wobei, falls keine vordefinierte Zuordnung der erkannten Geste zu einer Eingabe existiert, die Eingabe in Abhängigkeit von einer Vorhersage der beabsichtigten Interaktion des Benutzers erzeugt wird, und
**dadurch gekennzeichnet, dass** die Erzeugung der Vorhersage der beabsichtigten Interaktion des Benutzers von einer Vielzahl vordefinierter Zuordnungen für entsprechende Gesten abhängt, wobei die entsprechenden Gesten Komponenten der erkannten Geste darstellen.

13. Computersoftware, die, wenn sie durch einen Computer ausgeführt wird, den Computer veranlasst, das Verfahren nach Anspruch 12 vorzunehmen.

14. Nichtflüchtiges, maschinenlesbares Speichermedium, das Computersoftware nach Anspruch 13 speichert.

## Revendications

1. Système de génération d'entrée destiné à générer des entrées en fonction de gestes effectués par un utilisateur, le système comprenant :
une unité de suivi d'utilisateur (400) configurée pour suivre le mouvement d'un utilisateur ;
une unité d'identification de geste (410) configurée pour identifier un ou plusieurs gestes effectués par un utilisateur en fonction du mouvement suivi ; et
une unité de génération d'entrée (420) configurée pour générer une entrée représentative du geste identifié, l'entrée étant utilisée pour fournir une interaction avec une application qui est exécutée par un dispositif de traitement,
dans lequel, si aucune correspondance prédéfinie du geste identifié avec une entrée n'existe, l'unité de génération d'entrée est configurée pour générer l'entrée en fonction d'une prédiction de l'interaction souhaitée par l'utilisateur, et
**caractérisé en ce que** l'unité de génération d'entrée est configurée pour générer la prédiction de l'interaction souhaitée par l'utilisateur en fonction d'une pluralité de correspondances prédéfinies pour des gestes respectifs, les gestes respectifs représentant des composantes du geste identifié.

2. Système selon la revendication 1, dans lequel une cible pour l'interaction souhaitée par l'utilisateur est déterminée en fonction d'un contexte à l'intérieur de l'application, d'une heure de la journée, d'une parole détectée par l'utilisateur, et/ou de données de suivi de regard pour l'utilisateur.

3. Système selon l'une quelconque revendication précédente, dans lequel l'unité de génération d'entrée est configurée pour générer la prédiction de l'interaction souhaitée par l'utilisateur en fonction de correspondances prédéfinies pour des gestes similaires.

4. Système selon l'une quelconque revendication précédente, dans lequel l'unité de génération d'entrée est configurée pour générer la prédiction de l'interaction souhaitée par l'utilisateur avec un objet virtuel en fonction d'interactions précédemment suivies de l'utilisateur avec des objets du monde réel, dans lequel les interactions précédemment suivies comprennent des informations de geste stockées et des informations identifiant les objets du monde réel.

5. Système selon l'une quelconque revendication précédente, dans lequel l'unité de génération d'entrée est configurée pour générer l'entrée conformément à un profil d'utilisateur indiquant une ou plusieurs préférences ou caractéristiques physiques de l'utilisateur.

6. Système selon l'une quelconque revendication précédente, dans lequel l'unité de génération d'entrée est configurée pour générer l'entrée conformément à une détermination des entrées acceptées de l'application qui est exécutée.

7. Système selon l'une quelconque revendication précédente, dans lequel l'unité de génération d'entrée est configurée pour stocker l'entrée générée en association avec le geste identifié afin de générer une correspondance qui peut être utilisée pour la génération d'entrée future.

8. Système selon l'une quelconque revendication précédente, dans lequel l'unité de génération d'entrée est configurée pour déterminer si l'entrée générée correspond à l'interaction souhaitée par l'utilisateur en fonction d'une rétroaction par l'utilisateur.

9. Système selon la revendication 8, dans lequel, si l'entrée générée ne correspond pas à l'interaction souhaitée par l'utilisateur, une entrée alternative est générée en fonction du même geste identifié ou d'un geste répété par l'utilisateur.

10. Système selon l'une quelconque revendication précédente, comprenant une unité de rétroaction d'entrée (430) configurée pour générer une ou plusieurs recommandations pour l'utilisateur en fonction du geste identifié et/ou de l'entrée générée.

11. Système selon l'une quelconque revendication précédente, dans lequel le mouvement de l'utilisateur est suivi à l'aide d'images capturées de l'utilisateur et/ou de sorties à partir d'un ou de plusieurs capteurs associés à l'utilisateur ou d'un périphérique associé à l'utilisateur.

12. Procédé de génération d'entrée destiné à générer des entrées en fonction de gestes effectués par un utilisateur, le procédé comprenant :
le suivi (500) du mouvement d'un utilisateur ;
l'identification (510) d'un ou plusieurs gestes effectués par un utilisateur en fonction du mouvement suivi ; et
la génération (520) d'entrée représentative du geste identifié, l'entrée étant utilisée pour fournir une interaction avec une application qui est exécutée par un dispositif de traitement,
dans lequel, si aucune correspondance prédéfinie du geste identifié avec une entrée n'existe, l'entrée est générée en fonction d'une prédiction de l'interaction souhaitée par l'utilisateur, et
**caractérisé en ce que** la génération de la prédiction de l'interaction souhaitée par l'utilisateur dépend d'une pluralité de correspondances prédéfinies pour des gestes respectifs, les gestes respectifs représentant des composantes du geste identifié.

13. Logiciel informatique qui, lorsqu'il est exécuté par un ordinateur, amène l'ordinateur à effectuer le procédé selon la revendication 12.

14. Support de stockage lisible par machine non transitoire qui stocke un logiciel informatique selon la revendication 13.
